# EUROPÄISCHE PATENTANMELDUNG

(11) **EP 0 914 024 A1**
(43) Veröffentlichungstag der Anmeldung: **06.05.1999**
(21) Anmeldenummer: 98119651.2
(22) Anmeldetag: 17.10.1998
(51) Int. Cl.: H05B 33/08

(54) **Vorrichtung zur Ansteuerung von Leuchtdioden**

(30) Priorität: 03.11.1997 DE 19748446
(71) Anmelder: Mannesmann VDO Aktiengesellschaft, 60388 Frankfurt am Main (DE)
(72) Erfinder: Maisel, Jürgen, 55126 Mainz (DE); Beckschwarte, Klaus, 64832 Babenhausen (DE)
(74) Vertreter: Klein, Thomas, Dipl.-Ing.

(57) **Zusammenfassung**

Bei einer Vorrichtung zum Ansteuern einer Mehrzahl von Leuchtdioden, bei der mit einer oder mehreren Stromquellen jeweils die gleiche Helligkeit einer oder mehrerer Leuchtdioden einstellbar ist, ist vorgesehen, daß die Vorrichtung eine Speichervorrichtung aufweist, in der die zur Ansteuerung der Leuchtdioden erforderlichen Ansteuerparameter speicherbar sind, daß sie eine Ansteuervorrichtung zum Ansteuern der Leuchtdiode mit den gesteuerten Ansteuerparametern aufweist.

## Beschreibung

Die Erfindung betrifft eine Vorrichtung zum Ansteuern von Leuchtdioden, mit der die Helligkeit der Leuchtdioden einstellbar sind. Leuchtdioden werden auch zur Darstellung von Informationen verwendet. Hierbei sind entweder bestimmten Informationen bestimmte Leuchtdioden zugeordnet, oder aber die Anzeigen sind in mehrere Segmente oder Matrizen aufgeteilt, die jeweils eine oder mehrere Leuchtdioden enthalten. So können je nach ein- bzw. ausschalten der Leuchtdioden verschiedene Informationen auf einer Anzeige dargestellt werden.

Zum Ansteuern der Leuchtdioden ist es bekannt, den Strom durch die Leuchtdioden mittels eines Vor-Widerstandes einzuprägen, der zwischen die Ansteuerspannung und die Leuchtdiode geschaltet ist. Durch unterschiedliche Vorwärtsspannungen U _{F} der einzelnen Leuchtdioden (z.B. U _{F} = 1,8 V bis 2,5 V für rote Leuchtdioden) sind die Ströme durch die Leuchtdioden dennoch unterschiedlich hoch und dadurch auch die Helligkeit unterschiedlich. Deshalb ist es weiterhin bekannt, die Leuchtdioden mittels einer Stromquelle anzusteuern. So haben Vorwärtsspannungstoleranzen der Leuchtdioden und Spannungsversorgungstoleranzen nur noch geringen Einfluß auf die Helligkeit der Leuchtdioden.

Bei erhöhten Anforderungen bezüglich der gleichmäßigen Helligkeit, wie z.B. bei der gewünschten gleichmäßigen Helligkeit der einzelnen Leuchtdioden eines Bargraphen, ist es erforderlich, den Strom durch die Leuchtdioden chargenabhängig anzupassen, da das Verhältnis zwischen dem Lichtstrom, den die Leuchtdiode aussendet, und dem elektrischen Strom, der durch die Leuchtdiode fließt, chargenabhängig sich verändert und so die Leuchtdioden in verschiedene Helligkeitsklassen eingeteilt werden. Nach dem Stand der Technik werden im Fertigungsprozeß von Leuchtdiodenanzeigen den einzelnen Leuchtdioden einer Anzeige je nach Helligkeitsklasse entsprechende Widerstände zugeordnet, die mit diesen in Reihe geschaltet sind, so daß der Lichtstrom, den die Leuchtdioden aussenden, bei allen zu einem bestimmten Zeitpunkt angesteuerten Leuchtdioden einer Farbe gleich ist. Die Anpassung der Widerstände an die jeweiligen Leuchtdioden ist zeitaufwendig und demzufolge teuer. Aufgabe der Erfindung ist es daher, eine Vorrichtung anzugeben, bei der auf einer Anpassung der Widerstände für jede einzelne Leuchtdiode verzichtet werden kann.

Diese Aufgabe wird dadurch gelöst, daß ein oder mehrere Ansteuervorrichtungen vorhanden sind, denen eine oder mehrere Speichervorrichtungen zugeordnet sind, in denen die zur Ansteuerung der Leuchtdioden jeweils erforderlichen Ansteuerparameter speicherbar sind, wobei jede Stromquelle von einer Ansteuervorrichtung ansteuerbar ist.

Durch einen Digital-Analog-Wandler, der aus den Parametern die erforderliche Spannung zum Steuern der Stromquelle erzeugt, wird eine einfach aufgebaute Vorrichtung aufgebaut.

Dadurch daß die erforderlichen Parameter entsprechend der Helligkeitsklasse der einzelnen anzusteuernden Leuchtdioden speicherbar sind, kann auf eine Messung der Leuchtintensität der Leuchtdiode verzichtet werden. Es reicht aus, die Helligkeitsklasse der Leuchtdioden z.B. mittels eines Barcodelesers abzulesen, daraus den erforderlichen Strom zu berechnen und die entsprechend erforderlichen Stromwerte oder erforderlichen Spannungen zum Steuern einer Stromquelle zu speichern.

Dadurch, daß die erforderlichen Parameter durch einen Soll-/Istwertabgleich z.B. mittels einer Lichtmeßeinrichtung ermittelbar sind, ist der erforderliche Strom sehr genau ermittelbar, die zur Erzeugung dieses Stroms benötigten Parameter berechenbar und demzufolge auch speicherbar.

Durch Verwendung eines nichtflüchtigen Speichers zum Abspeichern der erforderlichen Parameter kann auf eine ständige Spannungsversorgung der Speichereinrichtung verzichtet werden. Dadurch ist es möglich, z.B. ein Anzeigeinstrument mit Parametern für ein Kraftfahrzeug herzustellen, ohne daß nach dem Speichern der erforderlichen Parameter eine ständige Spannungsversorgung des Speichers gewährleistet sein muß.

Dadurch, daß die Daten aus dem nichtflüchtigen Speicher auslesbar und in einen flüchtigen Speicher einlesbar sind, kann ein nichtflüchtiger Speicher auch für andere Speicheraufgaben verwendet werden. Der flüchtige Speicher ist in diesem Fall in einer Initialisierungsphase nach dem Einschalten des Gerätes oder des Gesamtsystems mit den benötigten Daten ladbar, z.B. nach dem Einschalten der Zündung in einem Kraftfahrzeug. Die Verwendung des flüchtigen Speichers neben oder in der Ansteuerung bringt den weiteren Vorteil, daß die Datenmengen nicht ständig über lange Datenleitungen transportiert werden müssen und so weder gestört werden können noch selbst Störungen verursachen können.

Die Erfindung wird nachfolgend anhand der Figuren näher erläutert.

Es zeigen:
- Figur 1: Das Blockschaltbild einer bevorzugten Ausführungsform der Erfindung, eingebaut in ein Kraftfahrzeugkombiinstrument
- Figur 2: Das Prinzipschaltbild eines bevorzugten Leuchtdioden-Treiber-IC's
- Figur 3: Das Ablaufdiagramm einer bevorzugten Ansteuerung des Leuchtdioden-Treiber-IC's.

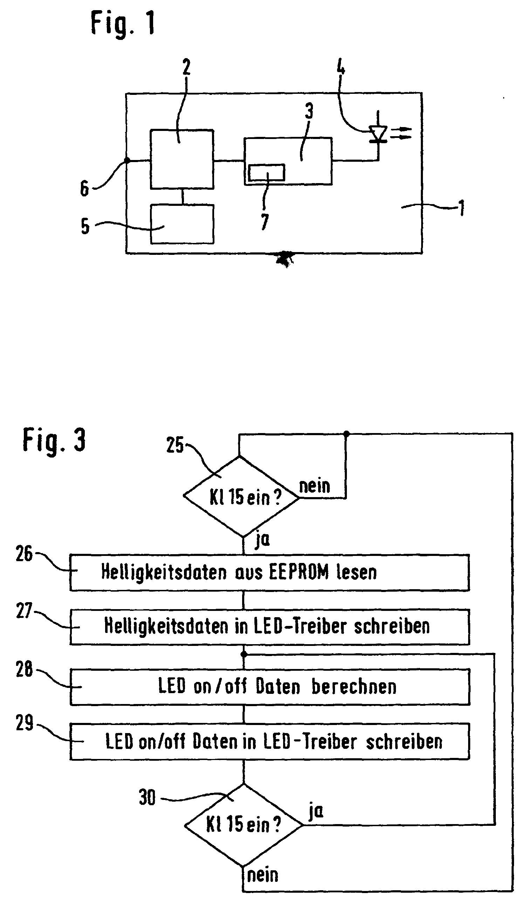

In Figur 1 weist ein Kombiinstrument 1 einen Controller 2 auf. Der Controller 2 ist vorzugsweise als Mikroprozessor ausgeführt und kann neben einem Leuchtdioden-Treiber-IC 3 die nicht dargestellten elektronischen und elektrischen Bauteile des Kombiinstrumentes 1 steuern. Das Leuchtdioden-Treiber-IC 3 steuert eine Vielzahl von Leuchtdioden an, von denen die Leuchtdiode 4 beispielhaft dargestellt ist. Der Controller 2 ist auch mit einem nichtflüchtigen Speicher 5 und einer Testschnittstelle 6 verbunden. Über die Testschnittstelle 6 können die für die Ansteuerung der jeweiligen Leuchtdiode 4 erforderlichen Ansteuerparameter vom Controller 2 in den nichtflüchtigen Speicher 5 während oder nach der Produktion des Kombiinstrumentes 1 abgelegt werden. Diese Ansteuerparameter können beispielsweise nach dem Einbau des Kombiinstrumentes 1 in ein Kraftfahrzeug nach dem Einschalten Zündung des Kraftfahrzeuges aus dem nichtflüchtigen Speicher 5 in einen oder mehrere flüchtige Speicher 7 des Leuchtdioden Treiber-IC's 3 eingelesen werden und dann zur Steuerung der Leuchtdiode 4 verwendet werden.

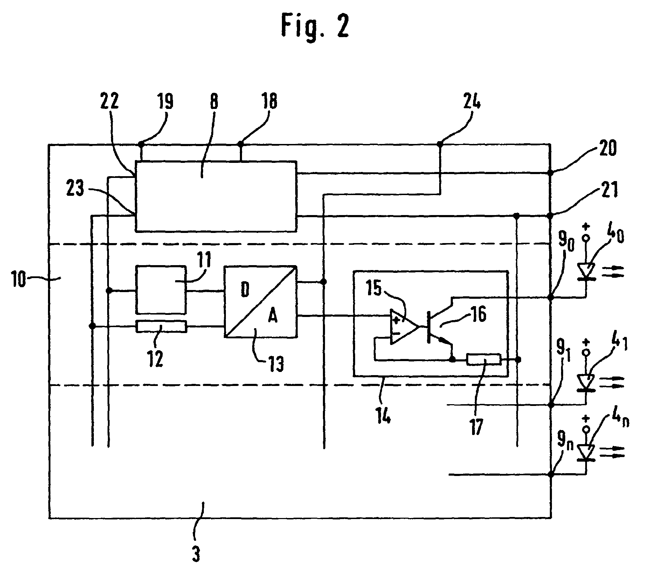

Der Leuchtdioden-Treiber IC 3 in Figur 2 weist die Ansteuerlogik 8 und pro Steuerausgang 9 ₀ - 9 ₙ eine jeweils identische Ansteuervorrichtung auf, wovon die Ansteuervorrichtung 10 für den Steuerausgang 9 ₀ dargestellt ist. Die Ansteuervorrichtung 10 weist ein Abgleichregister 11, ein Schalterregister 12, einen Digital-Analog-Wandler 13 und eine spannungsgesteuerte Stromquelle 14 auf. Die spannungsgesteuerte Stromquelle 14 besteht aus einem Operationsverstärker 15, einem Transistor 16 und einem Widerstand 17. Die Ansteuerlogik 8 weist den Takteingang 18, den Dateneingang 19, den Versorgungsspannungsanschluß 20 und den Masseanschluß 21 auf. Über die Datenleitung 22 können die Daten der Steuerparameter zur Stromansteuerung in das Abgleichregister 11 eingelesen werden. Mit diesen Daten wird im Digital-Analog-Wandler 13 die für die spannungsgesteuerte Stromquelle 14 erforderliche Spannung erzeugt. Die spannungsgesteuerte Stromquelle 14 liefert dann über den Steuerausgang 9 ₀ den Strom, der zur Ansteuerung der Leuchtdiode erforderlich ist, und zwar in der Größe, daß die Leuchtdiode 4 ₀ in der gleichen Helligkeit leuchtet wie die anderen eingeschalteten Leuchtdioden, wie die beispielhaft dargestellten Leuchtdioden 4 ₁ und 4 _{n.} Über die Datenleitung 23 und das Schaltregister 12 ist der Digital-Analog-Wandler 13 ein- und ausschaltbar und damit die Leuchtdiode 4 ₀. Vorzugsweise ist durch Ein-/Ausschalten mit veränderbarer Pulsbreite oberhalb einer Frequenz von beispielsweise 50 Hz die für daß menschliche Auge wahrnehmbare Helligkeit aller Leuchtdioden 4 ₀ bis 4 ₙ dimmbar, um z.B. die Helligkeit der Leuchtdioden 4 ₀ bis 4 ₙ an unterschiedliche äußerliche Lichtverhältnisse anzupassen.

Sofern die Leuchtdioden 4 ₀ bis 4 ₙ mit den gleichen Pulsbreiten ein- und ausgeschaltet werden, weisen sie untereinander die gleiche Helligkeit auf, da jede einzelne Leuchtdiode mit dem für sie je nach ihrer Helligkeitsklasse erforderlichen Strom angesteuert wird.

An den Steuereingang 24 kann durch Beschaltung mit einem angepaßten Widerstand der Strombereich (z.B. 0 bis 10 mA oder 0 bis 40 mA) je nach Art der verwendeten Leuchtdiode 4 angepaßt werden. Die Anpassung des Strombereichs kann aber auch z.B. durch eine Steuerung der Stromquelle 14 realisiert werden.

In Figur 3 ist ein mögliches Ablaufdiagramm des Controllers 2 zur Ansteuerung des Leuchtdioden-Treiber-IC 3 dargestellt.

In Block 25 wird überprüft, ob die Zündung eingeschaltet ist. Wenn nein, wird diese Abfrage ständig wiederholt. Wenn ja, werden in Block 26 die Daten aus dem nichtflüchtigen Speicher 5 gelesen und in Block 27 in Leuchtdioden-Treiber-IC 3 geschrieben und dort über die Ansteuerlogik 8 in die Abgleichregister 11. In Block 28 werden je nach gewünschtem Zustand( Aus, Ein bzw. gewünschte Helligkeit der LEDs) die Pulsbreiten der Ansteuerimpulse für die Schaltung des Schaltregisters 12 berechnet und in Block 29 in die Ansteuerlogik 8 geschrieben. In Block 30 wird überprüft, ob die Zündung noch eingeschaltet ist. Wenn nein, beginnt eine ständige Abfrage in Block 25. Wenn ja, wird die Regelschleife bestehend aus den Blöcken 28, 29, 30 erneut abgearbeitet.

Die Erfindung läßt sich auch z.B. dadurch ausführen, daß die Ströme durch die einzelnen Leuchtdioden gleich sind und die gleiche Helligkeit aller Leuchtdioden dadurch erreicht wird, daß die Pulsbreiten der Ansteuerimpulse für die einzelnen Leuchtdioden so variiert werden, daß die Helligkeit aller eingeschalteten Leuchtdioden gleich erscheint.

## Patentansprüche

1. Vorrichtung zum Ansteuern einer Mehrzahl von Leuchtdioden, bei der mit einer oder mehreren Stromquellen jeweils die gleiche Helligkeit einer oder mehrerer Leuchtdioden einstellbar ist, dadurch gekennzeichnet, daß eine oder mehrere Ansteuervorrichtungen vorhanden sind, denen eine oder mehrere Speichervorrichtungen zugeordnet sind, in denen die zur Ansteuerung der Leuchtdioden jeweils erforderlichen Ansteuerparameter speicherbar sind, wobei jede Stromquelle von einer Ansteuervorrichtung ansteuerbar ist.

2. Vorrichtung nach Anspruch 1, dadurch gekennzeichnet, daß die Ansteuervorrichtung einen Digital-Analog-Wandler (13) aufweist, der aus den gespeicherten Ansteuerparametern die erforderliche Spannung zum Steuern einer Stromquelle (14) erzeugt.

3. Vorrichtung nach einem der vorstehenden Ansprüche, dadurch gekennzeichnet, daß die erforderlichen Ansteuerparameter entsprechend der Helligkeitsklasse der anzusteuernden Leuchtdioden (4, 4 ₀ bis 4 ₙ ) speicherbar sind.

4. Vorrichtung nach einem der vorstehenden Ansprüche, dadurch gekennzeichnet, daß die Ansteuerparameter durch einen Soll/Istwertabgleich der Leuchtstärke der Leuchtdioden (4, 4 ₀ bis 4 ₙ ) ermittelbar sind.

5. Vorrichtung nach einem der vorstehenden Ansprüche, dadurch gekennzeichnet, daß die Speichervorrichtung ein nichtflüchtiger Speicher (5) ist.

6. Vorrichtung nach Anspruch 5, dadurch gekennzeichnet, daß die gespeicherten Werte aus dem nichtflüchtigen Speicher (5) auslesbar und in einen flüchtigen Speicher (7) einlesbar sind und daß die erforderlichen Ansteuerparameter zum Ansteuern der Ansteuervorrichtung aus dem flüchtigen Speicher (7) auslesbar sind.
